# EUROPEAN PATENT APPLICATION

(11) **EP 4 726 243 A1**
(43) Date of publication of application: **15.04.2026**
(21) Application number: 24383119.5
(22) Date of filing: 14.10.2024
(51) Int. Cl.: F16L 21/06, F16L 27/10

(54) **CONNECTOR DEVICE FOR CONNECTING TWO SPACED-APART CONDUITS**

(71) Applicant: BORGWARNER EMISSIONS SYSTEMS SPAIN, S.L.U., 36315 Vigo Pontevedra (ES)
(72) Inventor: GEA, Andrea, E-36209 Vigo, Pontevedra (ES); MARIÑO, Eloy, E-36205 Vigo, Pontevedra (ES); Riveiro, Eduardo, E-36416 Mos, Pontevedra (ES); LOZANO, Francisco, E-36400 O Porriño (ES); HERMIDA, Xoan, E-36380 Gondomar (ES)
(74) Representative: ABG Intellectual Property Law, S.L.

(57) **Abstract**

The present invention relates to a connector device intended for connecting two spaced-apart and essentially aligned conduits SP. The conduits SP being essentially aligned means that the tubes can be positioned with a certain degree of alignment and the connector device must ensure a sealed connection even under these circumstances. The connector device comprises means 1, 2 that allow connection with the end of both conduits SP, ensuring fluidic communication and a sealed attachment with both.

The application of this connection is mainly comprised in the use thereof in electric vehicles in the context of the search for solutions aimed at protecting the environment.

## Description

### OBJECT OF THE INVENTION

The present invention relates to a connector device intended for connecting two spaced-apart and essentially aligned conduits. The conduits being essentially aligned means that the tubes can be positioned with a certain degree of alignment and the connector device must ensure a sealed connection even under these circumstances.

The connector device comprises means that allow connection with the end of both conduits, ensuring fluidic communication and a sealed attachment with both.

The application of this connection is mainly comprised in the use thereof in electric vehicles in the context of the search for solutions aimed at protecting the environment.

### BACKGROUND OF THE INVENTION

One of the most active areas of technology is the design of fluid connectors. The manufacture of modules with a certain function that must be fluidically connected either in series or in parallel requires at some point connectors that ensure the fluidic connection, with there being a set of technical challenges that must be carefully addressed to ensure an effective and functional connection.

One of the areas where these challenges are emerging is in the construction of batteries for electrical energy storage that allows powering vehicles with electric engines. Batteries are formed by packed cells and have temperature requirements that need to be ensured, both to prevent the temperature from dropping below a certain lower value and to prevent excessive heating above a higher temperature value as well.

One way to ensure that temperature values are within range is by including heat exchange modules that either give off heat to or remove heat from battery cells.

These heat exchange modules use a liquid coolant such that, when connecting several modules to one another, there is a need to provide sufficiently reliable connectors which allow the connection of these modules.

A specific type of connection is the one established between essentially aligned conduits. This configuration occurs, for example, when a plurality of conduits are attached together by linking.

The modules have conduit ends designed to be aligned to the end of another conduit of the adjacent module. However, the individual fixing of each module means that the objective of aligning both ends of the tubes is not achieved in practice. In such cases, the fluid connector must be capable of ensuring a leak-tight and reliable connection even with this lack of alignment.

The separation between tubes is necessary to prevent, due to the lack of relative positioning between modules, the ends of the tubes to be attached from causing mechanical interference. Therefore, a certain separation which compensates for positioning errors is established. However, this separation imposes that the connection ensures that the fluid coming out of the end of a conduit is conducted to the end of the other conduit in sealing conditions.

Another aspect that must be ensured by connectors of this type is to show sufficient strength and durability. Continuing with the example of battery modules, when the modules are installed in a vehicle and are therefore subjected to accelerations, stresses, and vibrations that can cause relative movement between the ends of the tubes appear and the stresses appearing at the attachment cause leaks that overcome the sealing measures. These are not the only loads to which a battery module is subjected, they are also subjected to others that are no less important such as the internal pressure of the liquid coolant or the stresses due to thermal cycles that cause expansions and all of them result in stresses in the attachment.

Likewise, when the number of connectors to be installed is large, being a component that seems to be of minor importance compared to other more complex ones, it has a very significant impact on assembly times and therefore on final manufacturing costs.

Furthermore, the use of a large number of connectors increases the probability of failure of the assembly, so that under these circumstances the high reliability imposed on the design of a fluid connector is further justified.

Another important factor is head loss. Head loss is a key aspect in any fluid transport system. A poorly designed connector can generate turbulence or restrictions that increase pressure loss in the system, affecting flow efficiency. The connector design must be optimized to minimize head losses, ensuring that fluid is transferred from one tube to another as efficiently as possible since the separation between tube ends always implies that the connector will have at least one region exposed to the passage of fluid.

The connector device according to any of the embodiments described below overcomes these technical challenges.

### DESCRIPTION OF THE INVENTION

A first aspect of the invention relates to a device suitable, and more specifically adapted, for connecting two conduits intended to conduct a fluid, preferably liquid coolant, which are spaced apart from and essentially aligned with one another.

One of the most useful areas of application is the connection of heat exchange tubes that transport a heat exchange liquid for heating or cooling battery cells. In this case, each heat exchange tube has a conduit with two ends, one conduit end intended for feeding and the other end for collecting the outflow. The device is suitable for the connection of both conduit ends, in this case, each end of the tube or conduit will be connected by means of a connection device. Typical configurations of heat exchange tubes are either in U shape with the two ends on the same side and close to one another or in I shape where the two ends of the conduit are at opposite sides.

The connection gives rise to a pack of interconnected heat exchange conduits. In many of the packs of tubes thus formed, the separation tolerances between tubes, as well as the possible lack of alignment between consecutive tube conduits to be connected, are compensated for by the connection device.

This is not the only technical area of application since the connection device is applicable to the connection between two spaced-apart and essentially aligned conduits both in the automobile sector and in other technological sectors.

Essentially aligned should be understood to mean a condition in which the tubes are designed to be positioned in alignment, but the presence of small deviations is accepted in practice due both to the distancing between the geometric axes of both conduits to be connected and to the relative angle between said axes.

Even in the unwanted presence of a certain degree of misalignment, the connector device is designed to allow the connection, likewise ensuring the fluidic continuity with sealing conditions.

The connector device according to the invention comprises:
- *a first body, having a tubular configuration extending according to a longitudinal direction, comprising:*
   *a first end segment, with its inner surface adapted to establish sealing on the outer surface of the end of a first conduit, and*
   *a second end segment, arranged at the opposite end according to the longitudinal direction, with its inner surface adapted to establish sealing on the outer surface of the end of a second conduit, and*
   *a third intermediate segment, located between the first outer segment and the second end segment, according to the longitudinal direction, with its inner surface configured to fluidically connect the inner surface adapted to establish sealing of the first end segment and of the second end segment;*
- *a second body comprising a first rigid ring configured to externally surround the first end segment of the elastomeric body and a second rigid ring configured to externally surround the second end segment of the elastomeric body, both rigid rings being adapted at least to limit the radial expansion of the corresponding end segment thereof;*
*wherein the second body is formed at least by a first part and a second part, configured to be attached to one another through fixing means, wherein the attachment is located in a plane parallel to the longitudinal direction, wherein the plane of attachment preferably contains the longitudinal axis of the second body.*

The connector device comprises a first body which establishes the intermediate conduction between both fluid conduits to be connected. That is, it comprises:
- a segment, the one identified as first end segment, intended to establish sealing on the outer surface of the end of one of the conduits to be connected,
- another segment, the one identified as second end segment, opposite the first end segment, intended to establish sealing on the outer surface of the end of the other conduit to be connected, and
- a third intermediate segment, the segment located between the first end segment and the second end segment, which conducts the fluid at least along the space of separation between the conduits to be connected, providing fluidic continuity to the region located between the two sealing regions, that of the first segment and that of the second segment.

The sealing condition established between each end segment and the end of the corresponding conduit allows a certain degree of misalignment.

According to the preferred example, the first body is tubular shaped, such that at both ends of the first body, when coupling with the end of the corresponding conduit is carried out, the first end segment surrounds a first conduit and the second end segment surrounds the second conduit; both end segments therefore externally surround the ends of the conduits.

According to a preferred example, the first body is made of an elastomeric material with elastic deformation capacity at least in a portion intended to come into contact with the conduit to be connected.

In the first and second end segments, the inner surface is configured to be supported on the conduit, ensuring sealing.

Sealing is achieved by the pressure force exerted by the first body, with the help of the first rigid ring that externally surrounds the first end segment and the second rigid ring that externally surrounds the second end segment, on the corresponding conduit to be operatively connected. The pressure force acts on the sealing means, ensuring the absence of leak of the transported fluid.

According to the preferred example in which the first body is made of an elastomeric material at least in the portion intended to come into contact with the conduit to be connected, the action of pressure compresses the elastically deformable material so that it adapts to the outer surface of the ends of the conduits to be attached even under the misalignment condition.

The third intermediate segment performs several functions. One function, as described, is to establish flow continuity by maintaining the sealing condition ensured by the first end segment and the second end segment.

In turn, the first rigid ring and the second rigid ring limit the degree of expansion by deformation of at least the ends of the first body. This is particularly important when at least one elastically deformable portion to ensure sealing is interposed between both rings and, operatively, the conduit to be connected. The limitation of the degree of expansion ensures a minimum pressure of the elastically deformable material on the outer surface of the conduit to be connected, ensuring sealing.

One of the problems in ensuring the sealing of two conduits having a circular section is that the elements intended to configure the parts forming the connector must have a shape that corresponds to a configuration with shapes that correspond to a body of revolution, in this case with respect to the geometric axis of the connector, the longitudinal axis, or with shapes that are very similar to this shape.

When these shapes of a body of revolution is to be manufactured, they do not allow molding operations with the mold moving in the axial direction without the use of moving cores that are always more complex, and therefore more expensive. Inner portions with a larger diameter than other parts close to the ends prevent the exit of the mold when the parts are rigid.

To overcome this problem, according to the invention, the second body is formed by two parts that are finally attached to one another and where the attachment is established according to a plane parallel to the longitudinal direction.

Preferably, the plane contains the geometric axis of the fluid connector which defines the longitudinal direction. In this way, each of the parts is no longer a body of revolution and can be manufactured by molding in a single molding operation with simple molds without having to use or minimizing the use of moving cores. The molding direction can be perpendicular to the direction of the geometric axis of the connector, the direction identified as longitudinal direction. According to this other molding direction, the internal configuration of the second body can be more complicated, and particularly may have expanded areas with respect to other areas closer to any of the ends. In particular, it is possible to include expanded and set-back areas according to the molding direction which prevent the relative sliding between any element intended to ensure sealing and the rigid body which prevents its expansion.

After manufacturing the first part and the second part separately, an operation of attaching both parts, leaving the first body therein, is carried out when manufacturing the connector.

According to an embodiment applicable to all the examples described above, *the third intermediate segment has its inner surface configured either to establish contact with, or to be arranged between, the ends of the two conduits to be connected and to prevent said conduits from contacting one another.*

The insertion of the connector device can be performed manually or automatically. When the insertion is manual, given that the degree of insertion cannot be seen from the outside, the third intermediate segment according to this preferred example is configured to establish contact with the end of the inserted conduit. This allows inserting the connector device until achieving this contact, although there may be a distancing in operative conditions. The contact between the end of the conduit and the third intermediate segment allows, for example, ensuring that the end of the conduit does not invade a space that must be occupied by the end of the other conduit, for example, so that this other conduit is also sufficiently inserted so as to ensure that its corresponding end segment is supported on the outer surface thereof and sealing is not affected. Likewise, the third intermediate segment prevents contact between the ends of essentially aligned conduits. Otherwise, noise and damage may be generated in the materials of both conduits.

That said, in conditions of use it is not desirable for the conduits to be in contact with the third intermediate segment although the contact establishes limits that ensure the suitable conditions described in the preceding paragraph. The absence of contact prevents noises and damage. Additionally, the possibility of adjusting the degree of insertion allows the heat exchange tubes that are connected to not get too close together or too far apart since, if errors accumulate in a consecutive attachment of tubes, the packing can be either too narrow or too wide.

According to an embodiment applicable to all the examples described above, *the first body comprises at least one elastically deformable portion, preferably at least one inner portion adapted to establish sealing, and more preferably the first body is made of an elastomeric material.*

This embodiment has already been partially described. When the entire body is made of an elastically deformable material, it can be manufactured with simple molds that can be moved according to the longitudinal direction given that its elastic deformation capacity allows removal from the molds.

According to another embodiment, the first body has an inner portion adapted to establish sealing and this is the portion that is preferably made of an elastically deformable material, preferably using an elastomeric material. A particular way of obtaining a portion made of an elastomeric material is by means of a bi-injection manufacturing, combining two different materials in the molding operation. Another particular way of obtaining a portion made of an elastomeric material is by forming the first body using more than one element, a main body which can be rigid and has perimeter seats to ensure the position of elastomeric rings. A example of an elastomeric ring is an O-ring.

According to an embodiment applicable to all the examples described above, *the attachment means which are configured to attach the first part and the second part are clipping means.*

Although the first part and the second part are manufactured separately, a clipping attachment allows a structurally stable and very quick attachment. Both the male and female elements which ensure the clipping can occupy more space, projecting outwardly, allowing attachments with the necessary strength to be made and without affecting the shape of the inner portion of the second body.

According to an embodiment applicable to the example described above, *the first part comprises male*/*female clipping elements and the second part also comprises female*/*male clipping elements configured to couple with the clipping elements of the first part, and wherein the male female couplings and the female-male couplings are alternated according to the longitudinal direction.*

The indication male/female or female/male with the inverted order denotes that if part of clipping attachment is arranged alternating the male portion and the female portion in one part, they are also alternated in the other part but changing the order.

It has been verified that alternating the male/female portions in the same part, when there is an even number of clipping elements distributed symmetrically with respect to a plane perpendicular to the longitudinal direction centered longitudinally, then it is only necessary to manufacture one part given that the orientation is disregarded. That is, two parts of the same configuration are coupled facing one another with one part being rotated with respect to the other. This avoids the need for two different sets of molds and furthermore it has been proven that the stability of the attachment is much greater.

An alternative to this example is to place the male clipping elements in one of the parts and the female clipping elements in the other part. In this case, for example, different molds that, however, allow clearly differentiating one part from another, are required.

According to an embodiment applicable to all the examples described above, *the inner surface of the first end segment, or the second end segment, or both are configured by means of one or more inner perimeter flanges in order to establish sealing on the outer surface of the end of at least one of the conduits to be connected.*

The contact between the end of at least one of the conduits to be connected and an end of the first body intended to ensure sealing is established on the inner surface of said end of the first body. Contact through a perimeter flange allows, in the operating mode, surrounding the entire surface of the conduit. The smaller the contact region is according to the longitudinal direction, the greater the degree of alignment allowed by the contact is. This contact is preferably through an elastically deformable material.

According to an embodiment applicable to the example described above, *the one or more inner perimeter flanges are:*
- *perimeter flanges which are an integral part of the first body,*
- *elastomeric rings supported on a perimeter seat on the inner surface of the first*/*second end segment; or*
- *a combination of both.*

In the first case, the elastomeric portion which shows the elastically deformable behavior is the inner perimeter flange intended to be supported on the outer surface of the end of the conduit to be connected. The simplest example is when the first body, and particularly the perimeter flange, is made of an elastomeric material.

In the second case, the first body comprises elastomeric rings, for example, O-rings, and wherein the first body is formed by more than one element, a main body with seats for elastomeric rings and the elastomeric rings. The seats which receive the elastomeric rings prevent the longitudinal movement of the rings and also ensure the radial compression of the ring which ensures sealing.

According to an embodiment applicable to any of the examples described above, *the third intermediate segment comprises at least one inner flange, preferably a perimeter flange, which is an integral part of the first body configured:*
- *in a V shape according to a section according to a cutting plane containing the longitudinal axis; or*
- *a flange configuring a transverse wall, preferably a transverse perimeter wall.*

The third intermediate segment is intended to ensure the distancing between the conduits to be fluidically connected. In the first case, the V-shaped configuration ensures a low pressure drop given that the fluid does not come into a surface oriented transversely with respect to the main flow direction principal.

According to the second option, the transverse wall allows the front support of the connector, very effectively limiting movement. Front should be understood as the possible existence of a certain angle of incidence other than zero when a degree of misalignment exists between the conduit and the connector. Transverse is interpreted as being perpendicular to the longitudinal direction.

According to this embodiment, the smaller diameter of the perimeter flange has an inner diameter which, preferably, is not smaller than the diameter of the conduit so as not to cause a pressure loss. It is indicated that this condition preferably applies given that the conduits to be connected may have small thicknesses and the condition is not always applicable, particularly when it is more important to ensure that the perimeter flange ensures retention in all cases.

It should also be indicated that the characteristic of the inner flange of extending along the perimeter can be continuous or discontinuous. That is, it may be, for example, in the form of a perimeter rib or a set of flanges distributed along the perimeter.

Likewise, the measurement of the diameters should be interpreted broadly given that if a flange/recess is not continuous along the perimeter, diameter should be understood to mean the transverse measurement taken according to at least one section containing the longitudinal axis and intersecting said flange/recess. That is, the minimum distance between the flange and the longitudinal axis is taken.

According to an embodiment applicable to any of the examples described above, between the third intermediate segment and any of the end segments, *the first body comprises an area with a larger diameter than the conduit which is housed in the operating mode in the end segment, to allow a lack of alignment.*

The lack of alignment between the two conduits to be connected by means of the fluid connector also causes a lack of alignment between the connector and each of the conduits to be connected.

Now considering the lack of alignment between the connector and one of the conduits to be connected, the result has two consequences. A first consequence is that the contact area with a perimeter flange is not along a circular trajectory, but rather a slightly elliptical one. This change in trajectory in the contact region is compensated for by the elastic deformation of the flange which is in contact with the outer surface of the conduit. The second consequence is that, between the contact region along a closed trajectory and the end of the conduit to be connected, following the longitudinal direction, the conduit segment is prolonged until reaching its end, being separated from the longitudinal geometric axis of the connector, and therefore increasing the distance to said geometric axis.

According to this embodiment, increasing the diameter in the inner area where the conduit is housed, particularly the end thereof, allows compensation of the greater distance of the outer surface of the end of the conduit to the geometric axis and the absence of contact with the inner surface of the first body. This condition increases the degree of misalignment allowed by the connector.

According to an embodiment applicable to any of the examples described above, *the first rigid ring and the second rigid ring are connected by means of a mechanical linkage forming a single body after the attachment of the first part and the second part.*

The first rigid ring has a structural function at least to limit the expansion of the first end segment of the first body and the second rigid ring does the same for the second end segment. According to this embodiment, both rings are attached together and form a single body.

According to preferred examples, this mechanical linkage is formed by a plurality of individual mechanical linkages, for example, a plurality of continuous sheets with elastic deformation capacity.

In turn, the first rigid ring and the second rigid ring are part of the two parts into which the second body is divided, so, according to a preferred example, each part into which the second body is divided has a portion of the first ring and a portion of the second ring that are mechanically linked such that the two rings are formed and likewise linked when attaching the parts.

According to an embodiment applicable to the example described above relating to the mechanical linkage, *said mechanical linkage is an elastically deformable element to allow a misalignment between the first rigid ring and the second rigid ring by elastic deformation.*

The first ring surrounds the first end segment of the first body and the second ring surrounds the second segment of the first body. When the first body experiences deformation, which happens to a greater extent when the first body is made of an elastically deformable material, the existence of a mechanical linkage between the first ring and the second ring allows the misalignments experienced by the ends of the first body to also be compensated for by the first ring and second ring so that their position and orientation follow those of the end of the corresponding first body that they are surrounding externally.

According to an embodiment applicable to the example described above, *the mechanical linkage is formed by one or more strips, preferably configured in a corrugated manner, extending between the first rigid ring and the second rigid ring.*

According to this embodiment, a corrugated strip extending between the first ring and the second ring has a greater length than a straight strip and allows a higher value of bending deformations, so the position of the first ring and the second ring is ensured with respect to the ends of the first body that they surround.

According to an embodiment applicable to any of the examples described above, *the first rigid ring, the second rigid ring, or both comprise at least one elastically deformable strip configured to be supported, at all times or when there is deformation of the first body, on the outer surface of the third intermediate segment and at least to limit the radial expansion of said third intermediate segment.*

According to this embodiment, one or both the rings comprise an elastically deformable strip configured to be supported on the outer surface of the first body, specifically on the intermediate segment, such that in the event of a deformation of the intermediate segment that entails a radial expansion, it causes the elastic deformation of the elastically deformable strip.

If the elastically deformable strip in standby is separated from the intermediate segment, then the expansion of said intermediate segment first reaches the strip up to the point of support and subsequent expansion causes its elastic deformation which tends to limit its expansion. A high stiffness coefficient value means that expansion is more significantly limited as soon as the intermediate segment comes into contact with the elastically deformable strip.

According to another configuration, the elastically deformable strip, in standby conditions, is already in contact with the intermediate segment, so it limits expansion as soon as the conditions are no longer standby conditions.

This is the function of this at least one elastically deformable strip, i.e., limiting the expansion of the intermediate segment, where said expansion may be relevant when the first body is made of an elastically deformable material, for example, an elastomeric material, and with an inner pressure in the conduits that causes its expansion.

A second aspect of the invention relates to a heat exchange system comprising a plurality of heat exchange tubes with at least one fluidic connection for a heat exchange liquid, wherein the plurality of heat exchange tubes is interconnected by means of a connector according to any of the examples described above.

A third aspect of the invention relates to a method of assembling the device according to any of the described examples, which comprises:
- *interposing the first body between the first part and the second part of the second body of the fluid connector;*
- *attaching the first part and the second part by clipping to configure the second body such that:*
   *the first rigid ring externally surrounds the first end segment of the elastomeric body, and*
   *the second rigid ring externally surrounds the second end segment of the elastomeric body.*

A fourth aspect of the invention relates to a method for connecting two essentially aligned conduits by means of the assembled device, according to the preceding method, which comprises:
- *inserting the connector into the end of a conduit of the two conduits to be connected at one end of the fluid connector,*
- *inserting the end of the other conduit of the two conduits to be connected into the opposite end of the fluid connector.*

### DESCRIPTION OF THE DRAWINGS0

These and other features and advantages of the invention will become more apparent based on the following detailed description of a preferred embodiment, given only by way of illustrative and non-limiting example, in reference to the attached figures.
- Figure 1: This figure shows a perspective view of a first embodiment of the connector.
- Figure 2: This figure shows a section according to a plane containing the longitudinal axis of the connector according to the same embodiment. This figure also schematically shows a possible position of the conduits that are spaced apart from one another in a non-alignment condition.
- Figure 3: This figure shows an exploded perspective view of the two parts forming the second body and the first body of the first embodiment.
- Figure 4: This figure shows a perspective view of a second embodiment of the connector.
- Figure 5: This figure shows a section according to a plane containing the longitudinal axis of the connector of the second embodiment. This figure also schematically shows a possible position of the conduits that are spaced apart from one another in a non-alignment condition.
- Figure 6: This figure shows an exploded perspective view of the two parts forming the second body and the first body of the second embodiment.

### DETAILED DESCRIPTION OF THE INVENTION

According to the first inventive aspect, the present invention relates to a fluid connector intended for connecting two conduits that are spaced apart from one another.

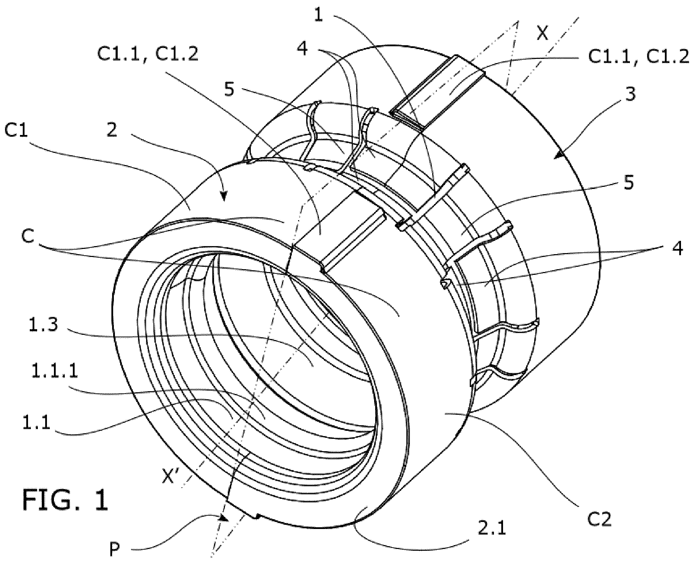

Now considering the figures, Figure 1 shows a perspective view of a first embodiment of the connector.

The fluid connector shows an opening considering the chosen orientation and has another opening at the opposite end not seen in this figure. The fluid connector is configured to receive a conduit (SP) through each opening, wherein both conduits (SP), i.e., the two conduits (SP) to be fluidically connected, can have a degree of misalignment.

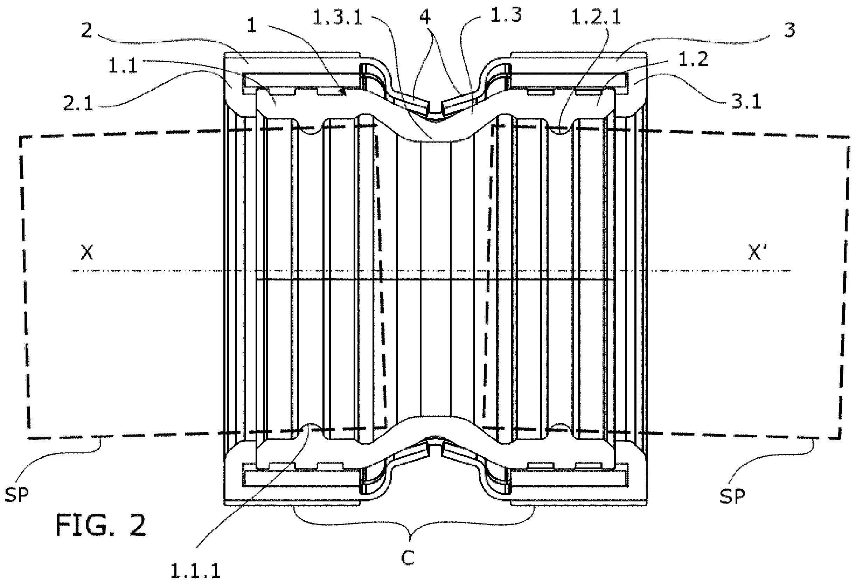

Figure 2 shows a longitudinal section (X-X') of the fluid connector and shows schematically, by means of two rectangles in thick discontinuous line, a possible position of insertion of the two conduits (SP) to be connected, showing a certain degree of misalignment.

The connector comprises a first body (1), in this embodiment manufactured in an elastomeric material that confers it elastically deformable behavior.

Three segments, two end segments and one central segment, are distinguished in the first body (1). A first end segment (1.1) and a second end segment (1.2) are distinguished in the end segments, with the latter being located at the opposite end. The first end segment (1.1) is the one which is arranged inside and can be seen in Figure 1 through one of the openings and it is configured to receive the end of one of the conduits (SP) to be connected by insertion. The second end (1.2) can also be seen from the other opening through which the other conduit (SP) entering by insertion is housed, not being visually accessible in Figure 1.

Figure 2 shows how the first segment (1.1) and the second segment (1.2) have their inner surfaces adapted to establish sealing on the outer surface of the end of the conduit (SP) corresponding thereto by means of using perimeter flanges (1.1.1, 1.2.1).

In Figure 2, the perimeter flanges are superimposed on the boundaries showing the position of the conduit (SP) given that they are depicted without the deformation that causes the contact and support condition. The material of the flange (1.1.1, 1.2.1) which overlaps with the depiction of the conduit (SP) is at least the material that is deformed and therefore causes a contact condition with support and pressure force on the outer surface of the conduit (SP), ensuring sealing.

Similarly, the degree of misalignment causes the end of both conduits to separate from the geometric axis of the fluid connector, in this case shown through the discontinuous line which shows the longitudinal direction (X-X') depicted in the said geometric axis. In this figure, the misalignment causes the end of both conduits (SP) to be elevated, which would mechanically interfere with the inner surface of the first body (1) except that there is a space with a diameter greater than the diameter of the conduits (SP) which prevents the contact of the end so as not to cause stresses in the radial direction, perpendicular to the longitudinal direction (X-X'), which would be detrimental to the conditions of being supported on the perimeter flanges (1.1.1, 1.2.1) responsible for ensuring sealing.

The third intermediate segment (1.3) which, in this embodiment, is centered with respect to the longitudinal direction (1.3) is also shown in a section view in Figure 2 and partially in Figure 1.

In this embodiment, the specific configuration of the intermediate segment (1.3) is in a V shape, considering the shape shown according to the section view in Figure 2, that is, according to a plane containing the geometric axis of the connector taken as the longitudinal direction.

The smaller diameter of the third intermediate segment (1.3) prevents the end of one of the conduits (SP) to be connected from contacting the other conduit (SP) to be connected.

The degree of pressure which ensures sealing causes a radial outward force that favors the expansion of the first end segment (1.1) and of the second end segment (1.2). This tendency to expand is compensated for by the presence of a first rigid ring (2) surrounding the first end segment (1.1) and of a second ring (3) surrounding the second end segment (1.2).

The first rigid ring (2) and the second rigid ring (3) form a second body (C) and are mechanically linked by means of a mechanical linkage established by means of a plurality of strips extending from the first rigid ring (2) to the second rigid ring (3), in this embodiment equidistantly distributed along the perimeter around the third intermediate segment (1.3).

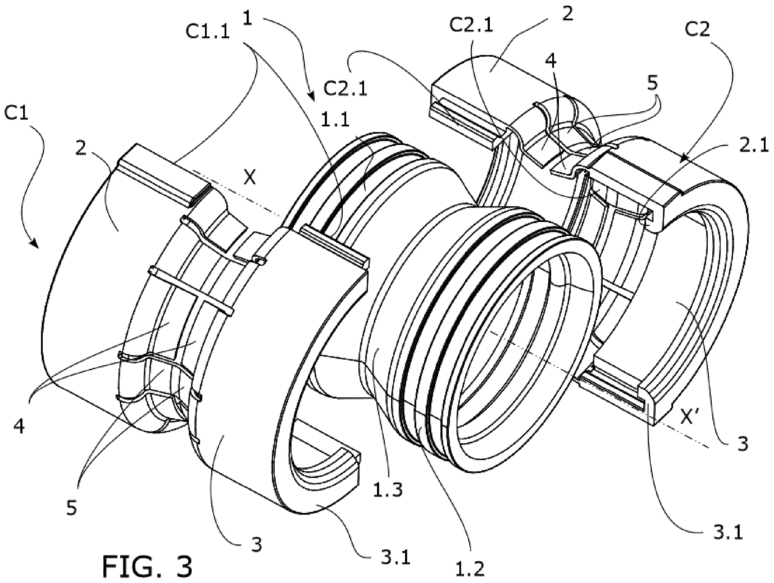

Figure 3 shows an exploded perspective view of the body (C) which is divided into two parts, a first part (C1) and a second part (C2), through a plane containing the geometric axis according to the longitudinal direction (X-X'). The separation surfaces of both parts (C1, C2) defined by the plane which divides the body (C) are also the surfaces corresponding to the attachment that allows configuring the body (C) by assembly after manufacturing the first part (C1) and the second part (C2) separately.

The first part (C1) and the second part (C2) have the same shape, so only a single shape has to be manufactured.

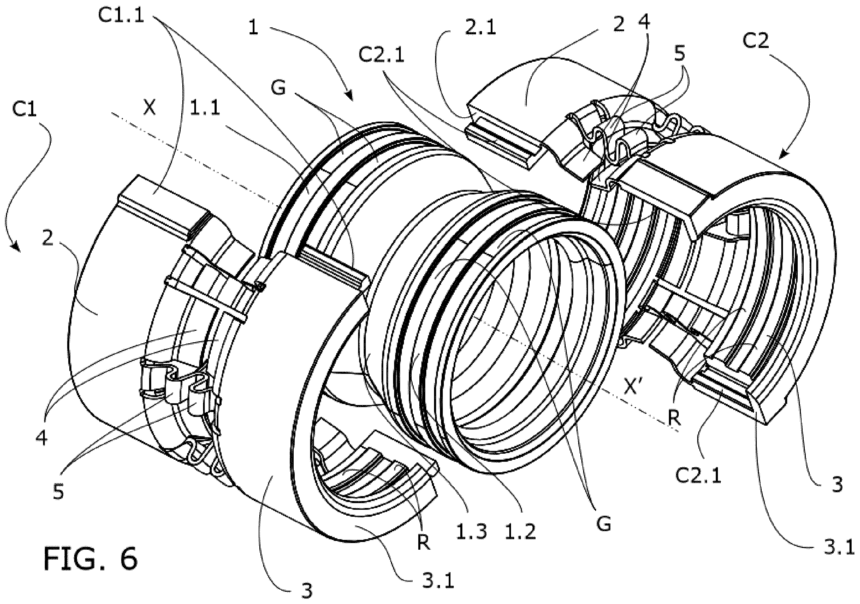

The second body (C) can be manufactured by molding such that the molds open and close in the radial direction perpendicular to the direction of the plane of division between the two parts. Both Figure 3 and Figure 6 show two wide, hollow two-way arrows with white interior which identify the molding direction, i.e., direction which is perpendicular to the longitudinal direction (X-X'). That is, a mold and a counter-mold acting in this direction have access to the inner face and the outer face of the first part (C1) and of the second part (C2) such that they can configure both recesses and projections that would not be accessible with a molding direction according to the longitudinal direction.

That is, this molding direction over half of the second body allows configuring the part with more pronounced perimeter flanges, the elements which have been described and will be described, located in the area limited by the two rigid rings (2, 3), as well as perimeter edges (2.1, 3.1) located at the ends of the second body (C) limiting the relative axial movement of the first body (1) inside the second body (C).

Other axial retention means between the first body (1) and the second body (C) which are either alternative or complementary to those described and are applicable to all the examples which have been described are also considered.

According to one embodiment, these other axial retention means are annular flanges between one part, the first body (1) or the second body (C), and the other part, the second body (C) or the first body (1), respectively. The existence of one or more perimeter grooves are shapes that can be executed using molds that are moved perpendicular to the longitudinal direction, however, other complementary shapes which also result from an opening and closing mold moving perpendicular to the longitudinal direction causes an axial retention between the two bodies, the first body (1) and the second body (2).

Another embodiment that is complementary with the preceding one is the use of tabs that emerge longitudinally either from the first end segment (1.1) or from the second end segment (1.2) towards the region where the third intermediate segment (1.3) is located and that show a configuration complementary with the shape of the outer surface of the third intermediate segment (1.3), for example by means of a step, in order to establish axial retention between the first body (1) and the second body (C).

Considering the third intermediate segment (1.3), Figure 3 shows that it has an outer notch that reproduces the already described V-shaped section. This area is also exposed to expansion by the internal pressure of the fluid transported from one conduit (SP) to another and also by possible mechanical interferences due to a contact force of the end of one or both conduits to be connected (SP). That is, when any of the conduits (SP) abuts and contacts the inner wall of the third intermediate segment (1.3), a pressure, which can be decomposed into an axial component oriented in the longitudinal direction and a radial component, is exerted on the material of the third intermediate segment (1.3). This radial component is what causes radial deformation.

The second body (C) has means for limiting this radial expansion of the third intermediate segment (1.3). According to this embodiment, the outer surface of the third intermediate segment (1.3) is in contact with:
a) at least a plurality of strips extending from the first ring (2) to the second ring (3) in order to establish the mechanical linkage (5) between both rings, and
b) at least a plurality of pairs of elastically deformable strips, separated from one another, that conform to the outer surface contacting them.

With respect to a), in this specific case the strips provide certain degree of elastic deformation to the mechanical linkage (5) between the first ring (2) and the second ring (3). Furthermore, their shape conforms to the outer surface of the third intermediate segment, limiting their degree of expansion since the strips act as if they were a leaf spring that is supported on the end rings (2, 3).

With respect to b), the pairs of elastically deformable strips (4), according to another embodiment, are spaced from the outer surface of the third intermediate segment (1.3). According to this embodiment, the action of limiting the expansion of the third intermediate segment (1.3) occurs after an initial degree of free expansion until said third intermediate segment (1.3) comes into contact with any of the elastically deformable strips and the expansion continues, now with retention that causes the recovery force of the deformed strip (4).

Going back to Figure 1, this figure shows how the highlighted area showing the female clipping coupling between the two parts, the first part (C1) and the second part (C2), is located on both sides of the plane (P) of division between both parts. Although not shown in this figure, it can however been seen in Figure 3 that the male elements of the clipping are also alternated on both sides, matching the male/female and female/male pairs.

This alternating male/female and female/male position according to the longitudinal direction (X-X') allows increasing the stability of the clipped attachment and disregarding the orientation of the parts so that only a single shape needs to be manufactured.

Additionally, it can also be seen in Figure 3 in which the parts are shown in an exploded view that there is only one type of clipping element, the female element is shown, in a ring, the first ring (2) in this view, and that there is another type of clipping element, the male element is shown both in the upper portion and in the lower portion, in the opposite ring, the second ring (3) in this view. This feature still further increases the stability of the clipping of the second body (C).

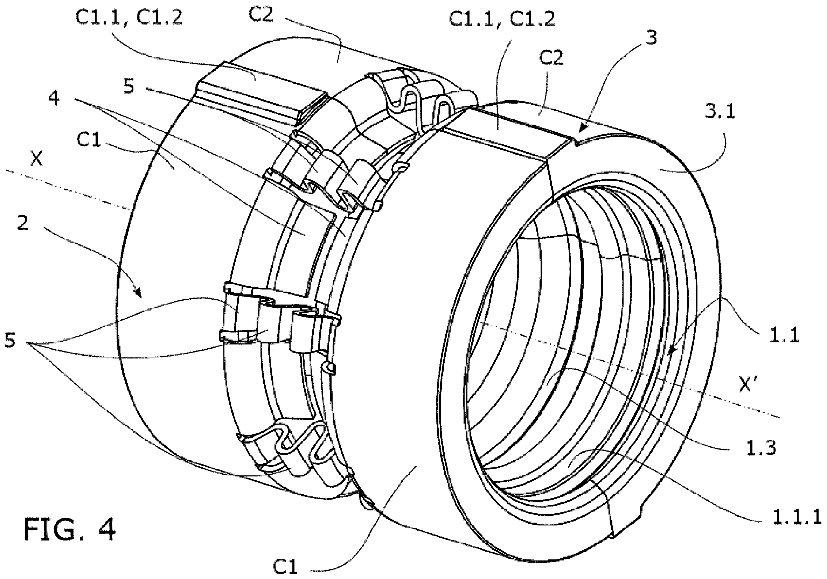

Figures 4, 5, and 6 show a second embodiment also following the same order, a perspective view, a section view according to a plane (P) containing the geometric axis taken as a reference of the longitudinal axis (X-X'), and an exploded perspective view, respectively.

All the elements described in the first embodiment shown in Figures 1, 2, and 3 coincide with those shown in this second embodiment, except for the mechanical linkage between the first ring (2) and the second ring (3), such that the descriptions of the common elements already set forth for the first example are considered valid for this second embodiment.

In both embodiments, a specific way has been used for axial or longitudinal (X-X') retention between the first body (1) and the second body (C). The first body (1) has perimeter grooves (G) on its outer surface that are complementary to perimeter flanges (R) of the second body (C) which are coupled to one another and prevent the relative movement in the longitudinal direction (X-X'). This solution of retention in the longitudinal direction (X-X') combining one or more grooves (G) with one or more flanges (R) is applicable to any of the examples of the invention.

Considering the mechanical linkage (5) between the first ring (2) and the second ring (3), this embodiment shows a strip having a greater length as a result of their corrugated configuration with a corrugation extending according to the longitudinal direction (X-X'). The greater length allows reducing the bending strength between the ends thereof, and therefore increasing the elastic deformation capacity of the connector in its central area. That is, the first end segment (1.1) and the second end segment (1.2) may adopt a relative orientation different from the aligned orientation corresponds to the standby configuration without being in the operating mode coupling two conduits (SP).

In this embodiment, the conduits (SP) to be connected can show a higher degree of lack of alignment given that, part can be compensated for internally as described in the first embodiment by the deformation of the inner perimeter flanges (1.1.1, 1.2.1), the region of larger diameter located on both sides of the intermediate segment that allows the ends of the conduits to separate from the geometric axis of the connector and, in this example the capacity of both ends of the connector to adopt different orientation, deforming in their central area.

In this embodiment, this deformation of the central area is due to the deformation of the first body (1), at least in the third intermediate segment (1.3) since it is formed by a material with elastic deformation capacity such as elastomeric material, and to the deformation of the corrugated strips forming the mechanical linkage (5) between the first rigid ring (2) and the second rigid ring (3).

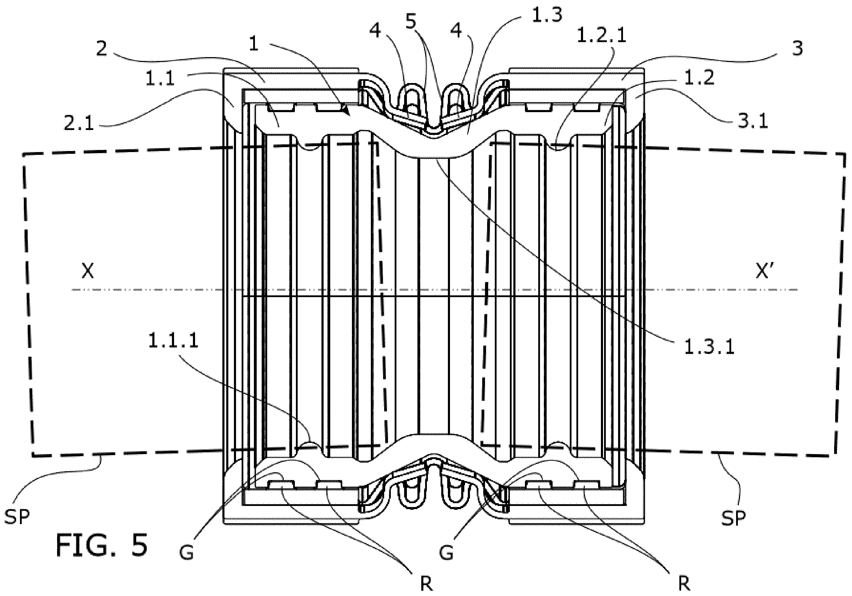

In this embodiment, as shown in detail in the section view of Figure 5 and partially in the perspective views of Figures 4 and 6, the inner surface of the strip with corrugated configuration is now no longer supported on the outer surface of the third intermediate segment (1.3), rather it is supported on a discrete assembly of points where the wave reaches its point closest to said outer surface. That is, in this configuration a surface so large as to limit the expansion of the third intermediate segment (1.3) like in the first embodiment is not established, rather the pairs of elastically deformable strips (4) are kept distributed along the perimeter in a uniformly distributed manner.

As in the first embodiment, the pairs of elastically deformable strips (4) and the mechanical linkages (5) are alternated with one another and equidistantly distributed along the perimeter.

Although not shown in any of the figures, in any of the examples described the inner perimeter flanges (1.1.1, 1.2.1) can be formed as separate elements, particularly O-rings. In this case, the material of the first body (1) can still be elastomeric, for example, with a higher degree of hardness, or can even be rigid, for example manufactured in molded plastic, with perimeter seats configured to house the O-rings.

## Claims

1. Fluid connector intended for connecting two spaced-apart and essentially aligned conduits (SP), wherein the device comprises:
- a first body (1), having a tubular configuration extending according to a longitudinal direction (X-X'), comprising:
a first end segment (1.1), with its inner surface adapted to establish sealing on the outer surface of the end of a first conduit (SP), and
a second end segment (1.2), arranged at the opposite end according to the longitudinal direction (X-X'), with its inner surface adapted to establish sealing on the outer surface of the end of a second conduit (SP), and
a third intermediate segment (1.3), located between the first outer segment (1.1) and the second end segment (1.2), according to the longitudinal direction (X-X'), with its inner surface configured to fluidically connect the inner surface adapted to establish sealing of the first end segment (1.1) and of the second end segment (1.2);
- a second body (C) comprising a first rigid ring (2) configured to externally surround the first end segment (1.1) of the elastomeric body (1) and a second rigid ring (3) configured to externally surround the second end segment (1.2) of the elastomeric body (1), both rigid rings (2, 3) being adapted at least to limit the radial expansion of the corresponding end segment (1.1, 1.2) thereof;
wherein the second body (C) is formed at least by a first part (C1) and a second part (C2), configured to be attached to one another through fixing means, wherein the attachment is located in a plane (P) parallel to the longitudinal direction (X-X'), wherein the plane of attachment preferably contains the longitudinal axis (X-X') of the second body (C).

2. Fluid connector according to claim 1, wherein the third intermediate segment (1.3) has its inner surface configured either to establish contact with, or to be arranged between, the ends of the two conduits (SP) to be connected and to prevent said conduits (SP) from contacting one another.

3. Fluid connector according to claim 1 or 2, wherein the first body (1) comprises at least one elastically deformable portion, preferably at least one inner portion adapted to establish sealing, and more preferably the first body (1) is made of an elastomeric material.

4. Fluid connector according to any of the preceding claims, wherein the attachment means configured to attach the first part (C1) and the second part (C2) are clipping means.

5. Fluid connector according to claim 4, wherein the first part (C1) comprises male/female clipping elements and the second part (C2) also comprises female/male clipping elements configured to couple with the clipping elements of the first part (C1), and wherein the male-female couplings and the female-male couplings are alternated according to the longitudinal direction (X-X').

6. Fluid connector according to any of the preceding claims, wherein the inner surface of the first end segment (1.1), or of the second end segment (1.2), or of both (1.1, 1.2) are configured by means of one or more inner perimeter flanges (1.1.1, 1.2.1) in order to establish sealing on the outer surface of the end of at least one of the conduits (SP) to be connected.

7. Fluid connector according to claim 6, wherein the one or more inner perimeter flanges are:
- perimeter flanges (1.1.1, 1.2.1) which are an integral part of the first body (1),
- elastomeric rings supported on a perimeter seat on the inner surface of the first/second end segment (1.1, 1.2); or
- a combination of both (1.1.1, 1.2.1).

8. Fluid connector according to any of the preceding claims, wherein the third intermediate segment (1.3) comprises at least one inner flange (1.3.1), preferably an inner perimeter flange, which is an integral part of the first body (1) configured:
- in a V shape according to a section according to a cutting plane containing the longitudinal axis (X-X'); or
- a flange configuring a transverse wall, preferably a transverse perimeter wall.

9. Fluid connector according to any of the preceding claims, wherein between the third intermediate segment (1.3) and any of the end segments (1, 2), the first body (1) comprises an area with a larger diameter than the conduit (SP) which is housed in the operating mode in the end segment (1, 2), to allow a lack of alignment.

10. Fluid connector according to any of the preceding claims, wherein the first rigid ring (2) and the second rigid ring (3) are connected by means of a mechanical linkage (5) forming a single body after the attachment of the first part (C1) and the second part (C2).

11. Fluid connector according to the preceding claim, wherein the mechanical linkage (5) is an elastically deformable element to allow a misalignment between the first rigid ring (2) and the second rigid ring (3) by elastic deformation.

12. Fluid connector according to the preceding claim, wherein the mechanical linkage (5) is formed by one or more strips, preferably configured in a corrugated manner, extending between the first rigid ring (2) and the second rigid ring (3).

13. Fluid connector according to any of the preceding claims, wherein the first rigid ring (2), the second rigid ring (3), or both (2, 3) comprise at least one elastically deformable strip (4) configured to be supported, at all times or when there is deformation of the first body (1), on the outer surface of the third intermediate segment (1.3) and, at least, to limit the radial expansion of said third intermediate segment (1.3).

14. A heat exchange system comprising a plurality of heat exchange tubes with at least one fluidic connection for a heat exchange liquid, wherein the plurality of heat exchange tubes are interconnected by means of a connector according to any of the preceding claims.

15. Method of assembling a fluid connector according to any of claims 1 to 13, which comprises:
- interposing the first body (1) between the first part (C1) and the second part (C2) of the second body (C) of the fluid connector;
- attaching the first part (C1) and the second part (C2) by clipping to configure the second body (C) such that:
the first rigid ring (2) externally surrounds the first end segment (1.1) of the elastomeric body (1), and
the second rigid ring (3) externally surrounds the second end segment (1.2) of the elastomeric body (1).

16. Method for connecting two essentially aligned conduits (SP) by means of the device assembled according to the method of the preceding claim, which comprises:
- inserting the connector into the end of a conduit (SP) of the two conduits to be connected at one end of the fluid connector,
- inserting the end of the other conduit of the two conduits to be connected into the opposite end of the fluid connector.
